# EUROPEAN PATENT SPECIFICATION

(11) **EP 3 486 632 B1**
(45) Date of publication and mention of the grant of the patent: **05.08.2020**
(21) Application number: 18205216.7
(22) Date of filing: 08.11.2018
(51) Int. Cl.: G01M 17/007, B60C 23/06

(54) **METHOD FOR TESTING OR VERIFYING THE INDIRECT PRESSURE MONITORING SYSTEM OF THE WHEELS OF A VEHICLE**
VERFAHREN ZUM TESTEN ODER VERIFIZIEREN DES INDIREKTEN DRUCKÜBERWACHUNGSSYSTEMS DER RÄDER EINES FAHRZEUGS
PROCÉDÉ DE TEST OU DE VÉRIFICATION DU SYSTÈME DE SURVEILLANCE DE LA PRESSION INDIRECTE DES ROUES D'UN VÉHICULE

(30) Priority: 17.11.2017 IT 201700131495
(43) Date of publication of application: 22.05.2019
(73) Proprietor: Butler Engineering & Marketing S.p.A., 42047 Rolo, Reggio Emilia (IT)
(72) Inventor: GONZAGA, Tullio, 42047 Rolo (Reggio Emilia) (IT); TAROZZI, Cristiano, Rio Saliceto (Reggio Emilia) (IT)
(74) Representative: Feltrinelli, Secondo Andrea

(56) References cited:
- EP-A1- 0 522 198
- CN-B- 102 052 990
- US-A- 6 012 329
- US-A1- 2016 016 444

## Description

### TECHNICAL FIELD OF THE INVENTION

The present invention relates to a method for testing or verifying the indirect pressure monitoring system of the wheels of a vehicle, as well as a testing and verification unit of this system.

### STATE OF THE PRIOR ART

A fundamental component of driving safety for motor vehicles is unquestionably represented by a complete efficiency of the tires, since any damage or anomalous functioning thereof can lead to obvious serious dangers.

It has been found that the bursting of the tires is sometimes due to slow and imperceptible pressure losses, which are absolutely detrimental to the "health" of the tire, since they cause, as a result of the alternating stress to which the tire is subjected, an overheating at high speeds. Thus, special tires called "runflat" have been developed that, in case of a gradual or sudden loss of pressure (for example following a puncture), are able to deform very limitedly and in a controlled manner so as to guarantee a good stability to the vehicle in any case, even if at reduced speed.

Generally, the driver detects an anomaly in the tires based on the behaviour of the motor vehicle, but this could be partly mitigated by the use of runflat tires.

In any case, to detect the tire puncture, a specific detection system must be adopted.

First in the US and around 2014 even in Europe, it has become mandatory to equip new vehicles with devices that detect tire inflation pressure and warn when a pressure loss of more than 20% of inflation pressure occurs.

These systems are divided into two specific categories.

The first category includes so-called "direct TPMS" systems consisting of systems equipped with hardware (control units, sensors, wiring) and software (management programs) suitably designed for tire pressure control.

The second category includes "TPMS indirect" systems, i.e. monitoring systems which detect a tire pressure variation using the ABS - ESP sensors system but using specific software.

Direct TPMS systems employ pressure sensors inserted inside each tire that are also able to detect the inflation air temperature, a decisive parameter to establish the real state of the tires; the data collected in this way are then transmitted via a radiofrequency (RF) signal to an electronic unit (control unit).

The indirect TPMS instead use the wheel speed sensors of the ABS-ESP system. They do not require any additional components inside or outside the wheels but require the implementation of a specific software.

The ABS-ESP system learns the average speed at which each wheel turns while driving at a constant speed. In this regard, if a tire loses pressure, its diameter slightly decreases, and this makes it rotate at a higher speed than the others. The detected speed is compared with that of the other or the second wheel of the same axle, the latter being taken as a reference to then evaluate the pressure of the first.

By way of example, wheels measuring 265/35 R 18, inflated at about 2.5 bar have a rolling radius of about 320.5 mm, whereby as they are deflated by 30%, the rolling radius drops to about 305 mm; consequently, at constant speed on a straight road, the revolutions of such a deflated wheel increase with respect to a correct inflation condition of the same variation percentage of the radius 320.5/305 = 1.050.

If a vehicle with a wheel as above that is deflated travels at 110 km/h, the revolutions that the inflated wheel performs in one minute can be detected based on the following: distance/rolling circumference = 110.000/2.013

In this case, the revolutions are therefore equal to 910.4 rpm.

The deflated wheel will instead perform 910.4 x 1.051 = 956.8 rpm.

US2016016444A1, US6012329A and CN102052990A teach respective solutions according to the state of the art.

### OBJECTS OF THE INVENTION

An object of the present invention is to provide a new method and a new testing unit of the indirect TPMS system.

Another object of the present invention is to provide a method and a testing unit of the indirect TPMS system that does not require deflating a wheel and driving the vehicle on the road.

Another object of the present invention is to provide a method and a unit as indicated above that can be made in a simple and easy way.

According to one aspect of the invention a method according to claim 1 is provided.

According to one aspect of the invention a unit according to claim 8 is provided.

The dependent claims refer to preferred and advantageous examples of embodiments of the invention.

### BRIEF DESCRIPTION OF THE DRAWINGS

Other features and advantages of the invention will be more apparent from the description of an exemplary embodiment of a method and a unit, illustrated by way of example in the accompanying drawings, wherein:

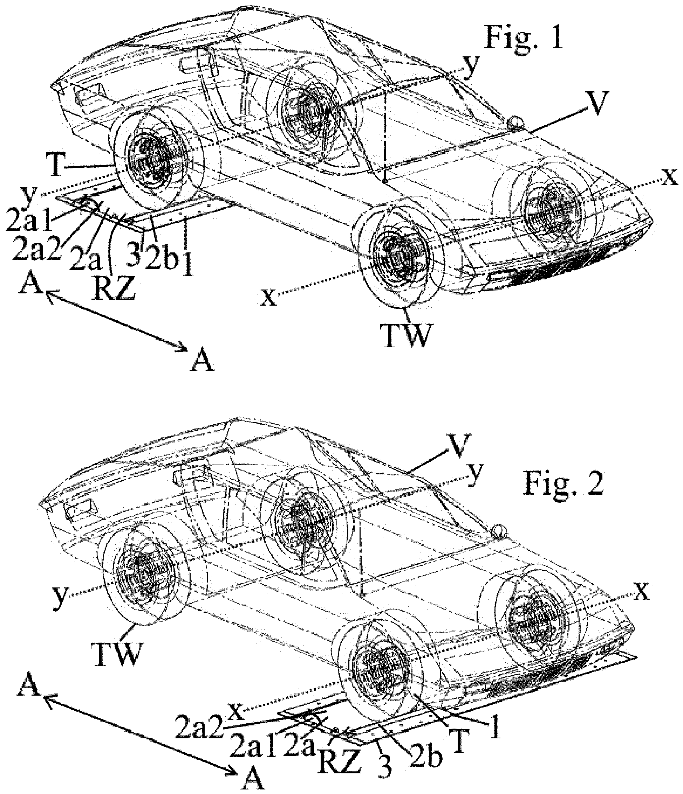

- figure 1 illustrates a vehicle with its own front wheels on a unit according to the present invention for the implementation of a method according to the present invention;
- figure 2 illustrates a vehicle with its own rear wheels on a unit according to the present invention for the implementation of a method according to the present invention.

In the accompanying drawings, identical parts or components are distinguished by the same reference numerals.

### EXAMPLES OF EMBODIMENTS OF THE INVENTION

The present invention relates to a method for testing or verifying the indirect TPMS or an indirect pressure monitoring system of the wheels TW of a vehicle V, such as a car, a truck, a motorcycle, such method, if desired, being implemented with a unit 1 according to the present invention, which will be better described later, comprises the following steps:
- checking the inflation pressure of at least two wheels TW of a vehicle V and, if they are deflated, inflating them at a predetermined pressure,
- controlling the advancement of the vehicle V so as to bring the at least two wheels TW above or at dragging into rotation means 2a, 2b,
- activating said dragging means 2a, 2b so as to simultaneously drag into rotation the at least two wheels TW with different speeds one with respect to the other,
- verifying whether the indirect pressure monitoring system signals or not an anomaly, such as a different rotation speed or pressure in the wheels TW dragged into rotation and, if this is not the case, i.e. if the indirect pressure monitoring system does not signal an anomaly, then the indirect pressure monitoring system does not work properly and must be serviced.

It should be noted that the indirect TPMS or indirect pressure monitoring system of the tires is known in the industry, therefore it will not be described in greater detail. Such system, as known, does not require additional hardware components, but is based on data (in particular the number of wheel revolutions) that arrive in the control unit of a vehicle from the ESP/ABS system, so if the wheels, in particular the wheels on the same axis, perform a different number of revolutions per time unit, then one of the two wheels has a smaller outer circumference than the other, i.e. it is more deflated.

More particularly, as above indicated, the "TPMS indirect" systems consist of monitoring systems which detect a tire pressure variation using the ABS - ESP sensors system but using specific software. Even more particularly, the indirect TPMS use the wheel speed sensors of the ABS-ESP system.

The step of checking the inflation pressure of the wheels TW can of course be carried out by an operator by means of a suitable device or by means of automatic detection systems.

In this regard, the wheels are considered deflated if the respective pressure is lower than a predetermined or standard pressure for the type of vehicle and wheels, which pressure clearly varies from one case to another and is usually established by the vehicle manufacturer or seller. If then it is necessary to inflate the wheels since the respective pressure is lower than a predetermined value, they are inflated by an operator or by means of automatic inflation systems or robots.

With regard to the step in which the advancement of the vehicle V is controlled, it should be noted that the same is interrupted when the at least two wheels TW are at or above the dragging into rotation means 2a, 2b, so that during the subsequent steps of activating and verifying, the wheels are at or above the dragging means 2a, 2b.

Clearly, the wheels TW are mounted on respective axles of the vehicle V during the execution of a method according to the present invention.

Naturally, the vehicle V can be provided with four or more wheels TW and therefore two or more pairs of wheels TW.

Instead, with reference to the step of activating the dragging means 2a, 2b, it can be carried out by an operator, acting on a suitable button or automatically, when the wheels are positioned at or above the dragging means.

According to a less preferred variant, the step of activating the dragging means 2a, 2b is started before the at least two wheels TW are brought at or above the dragging into rotation means 2a, 2b.

Preferably, the step of activating the dragging means 2a, 2b is maintained up to and during the verification steps.

As regards the verification step, it can be carried out, for example, by monitoring the indicator lights of the indirect pressure monitoring system or by obtaining pressure data from the on-board computer of the vehicle, for example by connecting to the on-board diagnostic or OBD socket. This can be verified directly by an operator or by an electronic control unit, which can possibly issue a final report.

Preferably, at least two wheels T are supported by a same axle of the vehicle V or in any case are rotatable around a same axis x-x, y-y even if each one is supported by a respective (mechanical) axle or semi-axle. According to a less preferred variant, the control and verification operations are carried out on two wheels not on the same axis or axle.

Even more preferably, during the inflation pressure checking step, it is verified whether the two wheels TW rotatable around the same axis are inflated or brought substantially at the same pressure and, if this is not the case, the wheels are inflated at the same pressure.

Preferably, in the case of a car or a truck, the checking, controlling, activating and verifying steps are carried out only for the pair of front wheels TW rotatable around another axis or first axis x-x of the vehicle V or only for the pair of rear wheels TW rotatable on or around the same second axis y-y of the vehicle V.

Alternatively, the checking, controlling, activating and verifying steps are carried out first for the pair of rear wheels TW rotating on or around the same second axis y-y of the vehicle V and then for the pair of front wheels TW rotatable around another axis or first axis x-x of the vehicle V or vice versa, without this constituting a limitation.

Naturally, in the case in which the vehicle V comprises three or more pairs of wheels TW, the process starts from some of such pairs or from all such pairs starting from those closest to the front or from the rear of the vehicle V.

In any case, to correctly perform the actuating step, it is necessary to know or set beforehand whether wheels on the same axis are being examined or not, because if the wheels are on different axes (for example in the case of motorcycle wheels or of a front and a rear wheel of a motor vehicle), the same could have a different diameter, and in that case this should be considered when setting the speed of the dragging means, for example rollers 2a, 2b to achieve a correct peripheral speed of the latter and therefore a correct dragging speed of the wheels TW.

Moreover, upon bringing the vehicle V with its own wheels TW at dragging into rotation means 2a, 2b, the motor of the vehicle V is kept started and the vehicle gearshift is kept neutral at least during the performance of the step of activating the dragging means 2a, 2b and of verifying the operation of the indirect system.

Advantageously, the dragging into rotation means comprise two or more motorized rollers 2a and, if desired, one or more second rollers or idle rollers or second motorized rollers 2b, each motorized roller 2a being designed to drag a wheel TW of a vehicle V into rotation, if desired, with the aid of one or more second rollers or idle rollers or second motorized rollers 2b.

The unit 1 defines a crossing direction A-A for a vehicle which is preferably transverse or orthogonal to the axis about which the motorized rollers 2a are mounted rotatable and, if provided, the idler roller or idler rollers 2b.

The motorized rollers 2a and, if provided, the idler roller or idler rollers 2b are mounted for rotation about an axis parallel to the axis of the vehicle V on which the wheels TW thereof are mounted.

Preferably, the motorized rollers 2a and, if provided, the second rollers 2b have two bases 2a1 with substantially circular outer contour (only one visible in figures) connected by means of a substantially cylindrical outer lateral surface 2a2. Clearly, the rollers 2a, 2b engage the wheels TW at their substantially cylindrical outer side surface.

Moreover, as indicated above, during the activating step the dragging means 2a, 2b drag the at least two wheels TW into rotation with speeds different one with respect to the other and to achieve this, if the dragging means 2a, 2b comprise two motorized rollers 2a, then the latter must have a peripheral speed different from one another or from the others, for example, as will be better described below, by making them with the same radius of the bases 2a1 with circular contour but by dragging them into rotation, for example by means of respective engines having rotation speeds different one with respect to the other or as indicated below, or even making them with different radius and dragging them into rotation at the same speed, also by means of the same engine, if desired, or at speeds different one with respect to the other.

Of course, the peripheral speed refers to the speed of points located on the periphery of the substantially cylindrical outer lateral surface 2a2 of the substantially circular moving rollers which engage the wheel TW.

According to the present invention, also a testing or verification station or unit 1 of the indirect pressure monitoring system of the wheels TW of a vehicle V is provided, preferably for implementing or performing the method indicated above, which unit 1 comprises dragging means 2a, 2b designed to drag at least two wheels TW of a vehicle V into rotation simultaneously with speeds different one with respect to the other, as well as activation means for the dragging means 2a, 2b.

As mentioned above, the dragging into rotation means 2a, 2b preferably comprise two or more motorized rollers 2a (one only visible in figures), each of which is designed to drag a wheel TW of a vehicle V into rotation, which motorized rollers 2a are spaced and mounted for rotation, for example about a respective or the same axis transverse to the crossing direction of the unit 1 by a vehicle V and, in use, mounted for rotation about an axis parallel to the axis of the vehicle V on which the wheels TW thereof are mounted.

More particularly, the at least two motorized rollers 2a can be activated so as to have a peripheral speed of their substantially cylindrical outer side surfaces different from each other, for example because they have bases 2a1 with circular contour with the same radius, but are dragged at different speeds from one another or from the others, or because they have different radius of the bases 2a1 with circular contour and are dragged into rotation at the same speed, if desired also by means of the same engine, or at different speeds.

The unit 1 can comprise as mentioned above also one or more second rollers, for example idler rollers 2b, if desired one or more second rollers or idle rollers 2b for each motorized roller 2a, which second roller(s) or idle roller(s) 2b define together with a respective motorized roller 2a a pair of rollers defining a rolling or dragging area into rotation for a wheel TW. Naturally, the second rollers or idle rollers 2b are mounted for rotation about an axis parallel to the axis of rotation of the motorized rollers 2a.

Moreover, one or more second rollers or idle rollers 2b are mounted close and next to a respective motorized roller 2a.

With regard to this aspect, the rollers 2a, 2b of a respective pair of rollers are mounted one in front of the other, at a same level (if the rollers 2a, 2b have the same dimensions or better the same radius of the bases with circular contour) and in such a way that the outer cylindrical side surface 2a2 of a roller 2a rotates flush to the outer cylindrical surface of a respective second roller 2b. Basically, between a motorized roller 2a and a second roller 2b or better between the respective outer cylindrical surfaces a very small passage window is delimited, for example between about 0.5 cm and 20 cm, if desired between 0.5 cm and 10 cm or between 2 and 5 cm, and in any case such as to prevent a wheel TW from sinking between such rollers 2a, 2b, which clearly would entail difficulties in letting the wheels TW of the vehicle V out of the unit 1.

It is however important that the two rollers 2a, 2b of a pair do not touch each other.

It is useful specify that the crossing direction A-A of the unit 1 by the vehicle defines the direction from the front to the rear of the unit, while the flanks or sides of the unit are defined substantially parallel to or in any case not orthogonal to the direction A-A.

The expression "the rollers 2a, 2b of a respective pair of rollers are mounted one in front of the other" means that a roller 2a is closer to the front and farthest from the rear with respect to the roller 2b or vice versa.

If desired, the rollers 2a, 2b of a respective pair of rollers have the same dimensions or at least the same radius and, if desired, the same height or length. Clearly, as indicated above, the rollers 2a, 2b of a pair could also have a different radius and, if desired, a different height.

Preferably, all the motorized rollers 2a have the same dimensions or at least the same radius of the bases with circular contour and, if desired, the same height or length of the outer cylindrical side surfaces.

More particularly, according to the non-limiting exemplary embodiment illustrated in the figures, the unit 1 comprises a base structure 3 mounted or that can be mounted in the floor, if desired in a suitable recess area provided therein, and supporting pairs of rollers 2a, 2b.

In that case, two pairs of rollers 2a, 2b can be mounted in the base structure 3 mutually flanked and in such a way that between a roller 2a and a second roller or a respective second roller, for example an idle roller 2b, an area of rolling or dragging into rotation RZ is delimited for a lower portion, in use, of a wheel TW of a vehicle.

The expression "mutually flanked", refers to a first pair of rollers 2a, 2b being closer to one side of the unit 1 than the other or second pair 2a, 2b, so that a pair of rollers 2a, 2b acts or is designed to act on a first right or left wheel TW of a vehicle V, while the other pair of rollers 2a, 2b acts or is designed to act on a second left or right wheel TW of a vehicle V simultaneously with the action of the first pair of rollers 2a, 2b on the first wheel TW.

If desired, the rollers 2a, 2b may slightly protrude upwardly from the base structure 3, with their own portion of the respective outer cylindrical side surface 2a2 which varies when the rollers 2a, 2b are being rotated, or may be contained entirely in the base structure 3.

Clearly, the area of rolling or dragging into rotation RZ is an area in which a wheel TW is dragged into rotation by a respective dragging means 2a, and can not translate or slide even as a result of the movement imparted to the wheel by the dragging means 2a, but it remains in the rolling or dragging into rotation area RZ, unless, of course, the advancement of the respective vehicle V is controlled. In this regard, blocking means of a vehicle, such as belts or blocks, may also be provided.

More particularly, according to the non-limiting exemplary embodiment shown in the figures, if all the rollers 2a, 2b have the same radius of the bases with circular contour, the rotation axis of each roller 2a, 2b of a first pair of rollers is aligned with the rotation axis of a roller 2a, 2b of a second pair of rollers, for example with the motorized rollers 2a having aligned rotation axis or a motorized roller 2a of a first pair with a rotation axis aligned with a second roller a second pair and a motorized roller 2a of the second pair with a rotation axis aligned with a second roller of the first pair.

If instead the rollers 2a have different radius of the bases with circular contour, then the roller 2a of greater radius will be at a lower level with respect to the other, but in such a way that the unit 1 is able to support two wheels TW of a vehicle at the same level, preventing the vehicle V from tilting during testing or verification.

Naturally, the first pair of rollers 2a, 2b is designed to engage and drag into rotation a first left or right wheel TW of a vehicle V, while, simultaneously with the action of the first pair of rollers 2a, 2b on a first wheel TW, the second pair of rollers 2a, 2b is instead designed to engage and drag into rotation a second left or right wheel TW of a vehicle mounted on the same axle or in any case mounted rotatably around the same axis of the first wheel.

Clearly, the motorized roller(s) 2a can be upstream (as described above) or downstream of the respective roller(s) or idle roller(s) 2b, with reference to the travel direction of the unit 1 by a wheel TW of a vehicle V.

The activation means may instead comprise at least one actuation motor of the motorized rollers 2a as well as at least an electronic control unit designed to control the actuation of such actuation motor of the motorized rollers 2a.

The unit may then be provided with sensor means, designed to detect, for example, the presence of a vehicle or its approach to the unit 1 or to the dragging means 2a.

The actuation of the activation means can be controlled by means of a suitable button or automatically, due to the aforementioned sensor means which inform the control unit that a pair of wheels TW of a vehicle V has been positioned at or above the dragging means 2a, 2b or that a vehicle V is advanced towards the dragging means 2a, 2b.

As indicated above, the dragging means are designed to simultaneously drag into rotation at least two wheel TWs of a vehicle V with speeds different one with respect to the other, and for this purpose at least two or more actuation motors (not shown in figures) may be provided, each designed to rotate a respective dragging means 2a, 2b, for example a roller with speeds such as to develop different peripheral speeds between a motorized roller 2a of a first pair of rollers and a motorized roller 2a of a second pair of rollers.

In this regard, the unit 1 can be equipped with at least one inverter (not shown in figures) associated with a respective motor of a dragging means 2a, 2b, or an inverter for each motor of each dragging means 2a, 2b, which inverter is designed to vary the supply frequency of a respective motor and therefore the speed imparted to the dragging means 2a, 2b. The inverter can intercept the power supply from the network or from a generator to the engine.

Clearly, the inverter actuation would be controlled by the electronic control unit.

Alternatively, the unit 1 may comprise other speed variation means of one or more engines or at least two actuation motors of different power for two motorized rollers 2a of two pairs of different rollers, so that it is possible to drag them into rotation (motorized rollers 2a) at speeds different from one another. This solution is clearly less preferred, considering, among other things, that if one desires to test indirect TPMS systems by varying the speed of each wheel of a vehicle, first the left or right wheels should be tested and then after reversing the travel direction of the vehicle V with respect to the unit 1, the indirect TPMS systems of the other wheels left or right should be tested.

If desired, the speed variation means, if provided, are adapted to vary the peripheral speed of a motorized roller 2a of a pair of rollers of one or more values between 5% and 20%, for example between 5% and 10% with respect to the other motorized roller 2a.

Moreover, it may be provided only one motor with means for transmission of movement to the dragging means 2a such as to guarantee the achievement of different speeds as above.

Alternatively or in addition to the above, it is possible to provide motorized rollers 2a with different radius of the bases 2a1 with circular contour, in which case the two motorized rollers 2a could also be driven at equal or different speeds, by means of respective engines or both with the same engine, clearly using appropriate connection and transmission systems. According to this variant, the achievement of a different peripheral speed of the rollers 2a and therefore a different speed of the wheels TW subjected to verification would in any case be guaranteed.

As will be understood, according to the present invention, in order to test the indirect TPMS system it is therefore necessary to vary the speed of a wheel with respect to another, for example with respect to the corresponding one of the same axis or axle.

This is possible because two wheels of a vehicle, for example the front wheels or the rear wheels or alternatively first the front wheels and subsequently or previously the rear wheels of a vehicle are positioned on two pairs of rollers 2a, 2b, each with at least one motorized roller 2a.

Thus, by increasing the peripheral speed of the right roller pair with respect to the left ones and/or vice versa, a deflated wheel can be simulated, and it is possible to check if the indirect TPMS system works.

The information can be checked directly in the dashboard indicators or obtained from the on-board computer of the vehicle, for example by connecting to the OBD socket.

As will be appreciated, the method and the unit according to the present invention guarantee to quickly and effectively verify the operation of the indirect TPMS system and this clearly is not possible according to the state of the prior art.

Modifications and variants of the invention are possible within the scope of protection defined by the claims.

## Claims

1. Method for testing or verifying the indirect pressure monitoring system of the wheels (TW) of a vehicle (V), which monitoring system detects a tire pressure variation using the Anti-lock Braking System (ABS) - Electronic Stability Program (ESP) sensors system, comprising the following steps:
- checking the inflation pressure of at least two wheels (TW) of a vehicle (V) and, if they are deflated, inflating them to a predetermined pressure,
- controlling the advancement of the vehicle (V) so as to bring said at least two wheels (TW) above or at dragging into rotation means (2a, 2b),
- activating said dragging means (2a, 2b) so as to simultaneously drag into rotation said at least two wheels (TW) with speeds different one with respect to the other,
- verifying whether the indirect pressure monitoring system signals or not an anomaly, such as a rotation speed or pressure different among said at least two wheels (TW) dragged into rotation and, if the indirect pressure monitoring system does not signal an anomaly, then the indirect pressure monitoring system does not work properly and must be serviced.

2. Method according to claim 1, wherein said at least two wheels (TW) are supported by a same axle of the vehicle (V) or are in any case rotatable about a same axis (x-x, y-y) even if each one is supported by a respective axle or semi-axle, and wherein during said step of checking the inflation pressure, it is checked if said at least two wheels (TW) are inflated substantially at the same pressure and in the event that this is not the case, the wheels are inflated or brought to the same pressure.

3. Method according to claim 2, wherein the steps of checking, controlling, activating and verifying are carried out for the pair of front wheels (TW) rotatable about the same first axis (x-x) of the vehicle (V) and/or for the pair of rear wheels rotatable around another axis or second axis (y-y) of the vehicle (V).

4. Method according to any one of the preceding claims, wherein, after bringing the vehicle (V) with two own wheels (TW) at the dragging into rotation means (2a, 2b), the engine of the vehicle (V) is kept started and the gearshift of the vehicle is kept neutral at least during performance of the steps of activating said dragging means (2a, 2b) and verifying the operation of the indirect pressure monitoring system.

5. Method according to any one of the preceding claims, wherein said dragging into rotation means comprises at least two motorized rollers (2a), each one designed to drag into rotation a wheel (TW) of a vehicle (V), said at least two motorized rollers (2a) being mounted for rotation about an axis parallel to the axes (x-x, y-y) of the vehicle (V) on which the wheels (TW) of the same are mounted.

6. Method according to claim 5, wherein said at least two motorized rollers (2a) each have two bases (2a1) with substantially circular outer contour connected by a substantially cylindrical outer lateral surface (2a2) and wherein said at least two motorized rollers (2a) have a different peripheral speed because they have the same radius of the bases with a circular contour (2a1), but they are dragged into rotation with rotation speeds different from one another or from the others, or because they have a different radius of the bases with a circular contour (2a1) and are dragged into rotation at the same speed or at different speeds.

7. Method according to any one of the preceding claims, wherein said verifying step is performed by monitoring the indicator lights of the indirect pressure monitoring system or by obtaining it from the on-board computer of the vehicle.

8. Unit or station for testing or verifying the indirect pressure monitoring system of the wheels (TW) of a vehicle (V) comprising dragging means (2a, 2b) designed to simultaneously drag into rotation at least two wheels (TW) of a vehicle (V) with different speeds one with respect to the other, as well as means for activating said dragging means (2a, 2b), wherein said dragging into rotation means comprise at least two motorized rollers (2a), each designed to drag a respective wheel (TW) of a vehicle (V) into rotation, said at least two motorized rollers (2a) being spaced and mounted for rotation about to a respective or to the same axis transverse to the crossing direction (A-A) of the unit (1) by a vehicle, and wherein said at least two motorized rollers (2a) each have two bases (2a1) with substantially circular outer contour connected by a substantially cylindrical outer lateral surface (2a2) and wherein said activation means are designed to drag said at least two motorized rollers (2a) with a peripheral speed different from one another or from the others, and wherein said activation means comprise at least one motor for actuating said at least two motorized rollers (2a) as well as at least one electronic control unit designed to control the actuation of said motor for actuating the motorized rollers (2a).

9. Unit according to claim 8, comprising at least one second roller or idle roller (2b) defining, together with the motorized rollers (2a) or with a respective motorized roller (2a), an area of rolling or dragging into rotation (RZ) for a wheel (TW).

10. Unit according to claim 9, wherein said at least one second roller or idle roller (2b) is mounted for rotation about an axis parallel to the axis of rotation of a respective motorized roller (2a).

11. Unit according to any one of claims 8 to 10, comprising a base structure (3) mounted or mountable in the floor and supporting at least two pairs of rollers (2a, 2b) at least one of which is motorized, so that between a motorized roller (2a) and a respective second roller (2b) an area of rolling or dragging into rotation (RZ) for a portion, in use, lower of a wheel (TW) of a vehicle, is delimited.

12. Unit according to claim 11, wherein said at least two pairs of rollers (2a, 2b) are placed side by side, so that a first pair of rollers (2a, 2b) is designed to drag into rotation a first left wheel (TW) of a vehicle (V), while, simultaneously with the action of the first pair of rollers (2a, 2b) on a first wheel (TW) of a vehicle, the second pair of rollers (2a, 2b) is designed to engage and drag into rotation a second right wheel (TW) of a vehicle (V) mounted on the same axle of the first wheel (TW).

13. Unit according to any claim 8 to 12, wherein said at least two motorized rollers have the same radius of the bases with a circular contour (2a1), but are dragged into rotation with rotational speeds different one with respect to the other, or have a different radius of the bases with a circular contour (2a1) and are dragged into rotation at the same speed or at different speeds.

14. Unit according to any one of the preceding claims 8 to 13, comprising at least one inverter associated with a respective actuation motor of a dragging means (2a), this inverter being designed to vary the power supply frequency of a respective motor and therefore the speed imparted to the dragging means (2a), the actuation of the inverter being controlled by the electronic control unit.

15. Unit according to any one of claims 8 to 14 for the implementation or execution of the method according to any one of claims 1 to 7.

## Patentansprüche

1. Verfahren zum Testen oder Überprüfen des indirekten Drucküberwachungssystems der Räder (TW) eines Fahrzeugs (V), wobei das Überwachungssystem eine Reifendruckänderung unter Verwendung des Antiblockier-Bremssystems (ABS) - elektronischen Stabilitätsprogramm-(ESP)-Sensorensystems erkennt, umfassend die folgenden Schritte:
- des Prüfens des Aufpumpdrucks von mindestens zwei Rädern (TW) eines Fahrzeugs (V) und, wenn sie luftleer sind, ihr Aufpumpen auf einen vorbestimmten Druck,
- des Steuerns der Vorwärtsbewegung des Fahrzeuges (V), um die besagten mindestens zwei Räder (TW) über oder an durch Ziehen in Drehung versetzende Mittel (2a, 2b) zu bringen,
- des Aktivierens der besagten Zugmittel (2a, 2b), um die besagten mindestens zwei Räder (TW) mit voneinander verschiedenen Geschwindigkeiten gleichzeitig durch Ziehen in Drehung zu versetzen,
- des Überprüfens, ob das indirekte Drucküberwachungssystem eine Anomalie, wie beispielsweise eine Drehgeschwindigkeit oder ein Druck, die/der zwischen den besagten mindestens zwei in Drehung versetzten Rädern (TW) verschieden ist, signalisiert oder nicht und, wenn das indirekte Drucküberwachungssystem keine Anomalie signalisiert, das indirekte Drucküberwachungssystem dann nicht richtig funktioniert und gewartet werden muss.

2. Verfahren nach Anspruch 1, worin die besagten mindestens zwei Räder (TW) durch eine gleiche Achse des Fahrzeugs (V) getragen werden oder in jedem Fall um eine gleiche Achse (x-x, y-y) drehbar sind, auch wenn jedes von einer jeweiligen Achse oder Halbachse getragen wird, und worin während des besagten Schritts des Überprüfens des Aufpumpdrucks geprüft wird, ob die besagten mindestens zwei Räder (TW) im Wesentlichen auf den gleichen Druck aufgepumpt sind, und falls dies nicht der Fall ist, die Räder aufgepumpt oder auf den gleichen Druck gebracht werden.

3. Verfahren nach Anspruch 2, worin die Schritte des Prüfens, Steuerns, Aktivierens und Überprüfens für das Paar von Vorderrädern (TW), die um die gleiche erste Achse (x-x) des Fahrzeugs (V) drehbar sind, und/oder für das Paar von Hinterrädern, die um eine andere Achse oder eine zweite Achse (y-y) des Fahrzeugs (V) drehbar sind, ausgeführt werden.

4. Verfahren nach irgendeinem der vorangegangenen Ansprüche, worin, nachdem das Fahrzeug (V) mit zwei eigenen Rädern (TW) an die durch Ziehen in Drehung versetzenden Mittel (2a, 2b) gebracht worden ist, der Motor des Fahrzeugs (V) gestartet gehalten wird und die Gangschaltung des Fahrzeugs mindestens während der Durchführung der Schritte des Aktivierens der besagten Zugmittel (2a, 2b) und des Überprüfens des Betriebs des indirekten Drucküberwachungssystems im Leerlauf gehalten wird.

5. Verfahren nach irgendeinem der vorangegangenen Ansprüche, worin die besagten durch Ziehen in Drehung versetzenden Mittel mindestens zwei motorisch angetriebene Rollen (2a) umfassen, die jeweils dazu ausgelegt sind, ein Rad (TW) eines Fahrzeugs (V) durch Ziehen in Drehung zu versetzen, wobei die besagten mindestens zwei motorisch angetriebenen Rollen (2a) zur Drehung um eine Achse montiert sind, die parallel zu den Achsen (x-x, y-y) des Fahrzeugs (V) ist, auf dem die Räder (TW) desselben montiert sind.

6. Verfahren nach Anspruch 5, worin die besagten mindestens zwei motorisch angetriebenen Rollen (2a) jeweils zwei Basen (2a1) mit im Wesentlichen kreisförmiger Außenkontur aufweisen, die durch eine im Wesentlichen zylindrische äußere Seitenfläche (2a2) verbunden sind, und worin die besagten mindestens zwei motorisch angetriebenen Rollen (2a) eine verschiedene Umfangsgeschwindigkeit aufweisen, weil sie den gleichen Radius der Basen mit einer kreisförmigen Kontur (2a1) aufweisen, sie aber mit voneinander oder von den anderen verschiedenen Drehgeschwindigkeiten in Drehung versetzt werden, oder weil sie einen verschiedenen Radius der Basen mit einer kreisförmigen Kontur (2a1) aufweisen und sie mit der gleichen Geschwindigkeit oder mit verschiedenen Geschwindigkeiten durch Ziehen in Drehung versetzt werden.

7. Verfahren nach irgendeinem der vorangegangenen Ansprüche, worin der besagte Überprüfungsschritt durch das Überwachen der Kontrollleuchten des indirekten Drucküberwachungssystems oder durch seinen Erhalt vom Bordcomputer des Fahrzeugs durchgeführt wird.

8. Einheit oder Station zum Testen oder Überprüfen des indirekten Drucküberwachungssystems der Räder (TW) eines Fahrzeugs (V), umfassend Zugmittel (2a, 2b), die dazu ausgelegt sind, mindestens zwei Räder (TW) eines Fahrzeugs (V) mit voneinander verschiedenen Geschwindigkeiten gleichzeitig durch Ziehen in Drehung zu versetzen, sowie Mittel zum Aktivieren der besagten Zugmittel (2a, 2b), worin die besagten durch Ziehen in Drehung versetzenden Mittel mindestens zwei motorisch angetriebene (2a) Rollen umfassen, die jeweils dazu ausgelegt sind, ein jeweiliges Rad (TW) eines Fahrzeugs (V) durch Ziehen in Drehung zu versetzen, wobei die besagten mindestens zwei motorisch angetriebenen Rollen (2a) beabstandet und zur Drehung um eine jeweilige oder die gleiche Achse quer zur Durchquerungsrichtung (A-A) der Einheit (1) durch ein Fahrzeug montiert sind, und worin die besagten mindestens zwei motorisch angetriebenen Rollen (2a) jeweils zwei Basen (2a1) mit im Wesentlichen kreisförmiger Außenkontur aufweisen, die durch eine im Wesentlichen zylindrische äußere Seitenfläche (2a2) verbunden sind, und worin die besagten Aktivierungsmittel ausgelegt sind, um die besagten mindestens zwei motorisch angetriebenen Rollen (2a) mit einer voneinander oder von den anderen verschiedenen Umfangsgeschwindigkeit zu ziehen, und worin die besagten Aktivierungsmittel mindestens einen Motor zum Betätigen der besagten mindestens zwei motorisch angetriebenen Rollen (2a) sowie mindestens eine elektronische Steuereinheit, die zum Steuern der Betätigung des besagten Motors zum Betätigen der motorisch angetriebenen Rollen (2a) ausgelegt ist, umfasst.

9. Einheit nach Anspruch 8, umfassend mindestens eine zweite Rolle oder Leerlaufrolle (2b), die zusammen mit den motorisch angetriebenen Rollen (2a) oder mit einer jeweiligen motorisch angetriebenen Rolle (2a) einen durch Rollen oder Ziehen in Drehung versetzenden Bereich (RZ) für ein Rad (TW) definiert.

10. Einheit nach Anspruch 9, worin die besagte mindestens eine zweite Rolle oder Leerlaufrolle (2b) zur Drehung um eine Achse parallel zur Drehachse einer jeweiligen motorisch angetriebenen Rolle (2a) montiert ist.

11. Einheit nach irgendeinem der Ansprüche 8 bis 10, umfassend eine im Boden montierte oder montierbare Basisstruktur (3) und tragend mindestens zwei Rollenpaare (2a, 2b) trägt, von denen mindestens eines motorisch angetrieben ist, sodass zwischen einer motorisch angetriebenen Rolle (2a) und einer jeweiligen zweiten Rolle (2b) ein durch Rollen oder Ziehen in Drehung versetzender Bereich (RZ) für einen bei Verwendung unteren Abschnitt eines Rades (TW) eines Fahrzeuges begrenzt ist.

12. Einheit nach Anspruch 11, worin die besagten mindestens zwei Rollenpaare (2a, 2b) nebeneinander angeordnet sind, sodass ein erstes Rollenpaar (2a, 2b) dazu ausgelegt ist, ein erstes linkes Rad (TW) eines Fahrzeugs (V) durch Ziehen in Drehung zu versetzen, während gleichzeitig mit der Wirkung des ersten Rollenpaares (2a, 2b) an einem ersten Rad (TW) eines Fahrzeugs das zweite Rollenpaar (2a, 2b) dazu ausgelegt ist, in ein zweites rechtes Rad (TW) eines Fahrzeugs (V), das auf der gleichen Achse des ersten Rads (TW) montiert ist, einzugreifen und durch Ziehen in Drehung zu versetzen.

13. Einheit nach irgendeinem der Ansprüche 8 bis 12, worin die besagten mindestens zwei motorisch angetriebenen Rollen den gleichen Radius der Basen mit einer kreisförmiger Kontur (2a1) aufweisen, aber mit voneinander verschiedenen Drehgeschwindigkeiten durch Ziehen in Drehung versetzt werden, oder einen verschiedenen Radius der Basen mit einer kreisförmigen Kontur (2a1) aufweisen und mit der gleichen Geschwindigkeit oder mit unterschiedlichen Geschwindigkeiten durch Ziehen in Drehung versetzt werden.

14. Einheit nach irgendeinem der vorangegangenen Ansprüche 8 bis 13, umfassend mindestens einen Inverter, der mit einem jeweiligen Antriebsmotor eines Zugmittels (2a) verbunden ist, wobei dieser Inverter dazu ausgelegt ist, die Stromversorgungsfrequenz eines jeweiligen Motors und damit die auf das Zugmittel (2a) übertragene Geschwindigkeit zu verändern, wobei die Betätigung des Inverters durch die elektronische Steuereinheit gesteuert wird.

15. Einheit nach irgendeinem der Ansprüche 8 bis 14 für die Implementierung oder Ausführung des Verfahrens nach irgendeinem der Ansprüche 1 bis 7.

## Revendications

1. Procédé pour tester ou vérifier le système de contrôle indirect de la pression des roues (TW) d'un véhicule (V), ledit système de contrôle détectant une variation de la pression du pneumatique en utilisant le système de freinage antiblocage (ABS) - système de capteurs du programme de stabilité électronique (ESP), comprenant les étapes suivantes :
- contrôle de la pression de gonflage d'au moins deux roues (TW) d'un véhicule (V) et, si elles sont dégonflées, gonflage de ces roues à une pression prédéterminée,
- contrôle de l'avancée du véhicule (V) afin d'amener lesdites au moins deux roues (TW) au-dessus ou au niveau de moyens de traction en rotation (2a, 2b),
- activation desdits moyens de traction (2a, 2b) de façon à tirer simultanément en rotation lesdites au moins deux roues (TW) à des vitesses différentes l'une par rapport à l'autre,
- vérification si le système de contrôle indirect de la pression signale ou pas une anomalie, comme une vitesse de rotation ou une pression différente entre lesdites au moins deux roues (TW) tirées en rotation et, si le système de contrôle indirect de la pression ne signale pas une anomalie, le système de contrôle indirect de la pression ne fonctionne pas correctement et doit faire l'objet d'un entretien.

2. Procédé selon la revendication 1, dans lequel lesdites au moins deux roues (TW) sont supportées par un même essieu du véhicule (V) ou sont dans tous les cas rotatives autour d'un même axe (x-x, y-y) même si chacune est supportée par un essieu ou semi-essieu respectif, et dans lequel pendant ladite étape de contrôle de la pression de gonflage, on vérifie si lesdites au moins deux roues (TW) sont gonflées sensiblement à la même pression et si ce n'est pas le cas, les roues sont gonflées ou portées à la même pression.

3. Procédé selon la revendication 2, dans lequel les étapes d'inspection, de contrôle, d'activation et de vérification sont réalisées pour la paire de roues avant (TW) rotatives autour du même premier axe (x-x) du véhicule (V) et/ou pour la paire de roues arrière rotatives autour d'un autre axe ou deuxième axe (y-y) du véhicule (V).

4. Procédé selon l'une quelconque des revendications précédentes, dans lequel, après avoir amené le véhicule (V) avec ses deux propres roues (TW) au niveau des moyens de traction en rotation (2a, 2b), le moteur du véhicule (V) est maintenu à l'état de démarrage et la boîte de vitesse du véhicule est maintenue au point mort au moins pendant l'exécution des étapes d'activation desdits moyens de traction (2a, 2b) et de vérification du fonctionnement du système de contrôle indirect de la pression.

5. Procédé selon l'une quelconque des revendications précédentes, dans lequel lesdits moyens de traction en rotation comprennent au moins deux rouleaux motorisés (2a), chacun étant conçu pour tirer en rotation une roue (TW) d'un véhicule (V), lesdits au moins deux rouleaux motorisés (2a) étant montés pour tourner autour d'un axe parallèle aux axes (x-x, y-y) du véhicule (V) sur lequel les roues (TW) de celui-ci sont montées.

6. Procédé selon la revendication 5, dans lequel lesdits au moins deux rouleaux motorisés (2a) comportent chacun deux bases (2a1) avec un contour extérieur sensiblement circulaire raccordé par une surface latérale extérieure sensiblement cylindrique (2a2) et dans lequel lesdits au moins deux rouleaux motorisés (2a) ont une vitesse périphérique différente étant donné qu'ils ont le même rayon des bases avec un contour circulaire (2a1), mais qu'ils sont tirés en rotation avec des vitesses de rotation différentes l'une de l'autre ou des autres, ou parce qu'ils ont un rayon des bases différent avec un contour circulaire (2a1) et sont tirés en rotation à la même vitesse ou à des vitesses différentes.

7. Procédé selon l'une quelconque des revendications précédentes, dans lequel ladite étape de vérification est réalisée en contrôlant les témoins du système de contrôle indirect de la pression ou en l'obtenant grâce à l'ordinateur embarqué du véhicule.

8. Unité ou station pour tester ou vérifier le système de contrôle indirect de la pression des roues (TW) d'un véhicule (V) comprenant des moyens de traction (2a, 2b) conçus pour tirer simultanément en rotation au moins deux roues (TW) d'un véhicule (V) avec des vitesses différentes l'une par rapport à l'autre, ainsi que des moyens pour activer lesdits moyens de traction (2a, 2b), dans lequel lesdits moyens de traction en rotation comprennent au moins deux rouleaux motorisés (2a), chacun étant conçu pour tirer en rotation une roue (TW) respective d'un véhicule (V), lesdits au moins deux rouleaux motorisés (2a) étant espacés et montés pour être en rotation autour d'un axe respectif ou du même axe transversal à la direction transversale (A-A) de l'unité (1) par un véhicule, et dans lequel lesdits au moins deux rouleaux motorisés (2a) ont chacun deux bases (2a1) avec un contour extérieur sensiblement circulaire raccordé par une surface latérale extérieure sensiblement cylindrique (2a2) et dans lequel lesdits moyens d'activation sont conçus pour tirer lesdits au moins deux rouleaux motorisés (2a) avec une vitesse périphérique différente l'un de l'autre ou des autres, et dans lequel lesdits moyens d'activation comprennent au moins un moteur pour actionner lesdits au moins deux rouleaux motorisés (2a) ainsi qu'au moins une unité de commande électronique conçue pour commander l'actionnement dudit moteur pour actionner les rouleaux motorisés (2a).

9. Unité selon la revendication 8, comprenant au moins un deuxième rouleau ou rouleau libre (2b) définissant, avec les rouleaux motorisés (2a) ou avec un rouleau motorisé (2a) respectif, une surface de roulement ou de traction en rotation (RZ) pour une roue (TW).

10. Unité selon la revendication 9, dans laquelle ledit au moins un deuxième rouleau ou rouleau libre (2b) est monté pour tourner autour d'un axe parallèle à l'axe de rotation d'un rouleau motorisé (2a) respectif.

11. Unité selon l'une quelconque des revendications 8 à 10, comprenant une structure de base (3) montée ou montable sur le sol et supportant au moins deux paires de rouleaux (2a, 2b) au moins l'un d'eux étant motorisé, de telle sorte qu'entre un rouleau motorisé (2a) et un deuxième rouleau (2b) respectif, une surface de roulement ou de traction en rotation (RZ) pour une partie, pendant l'utilisation, inférieure d'une roue (TW) d'un véhicule, est délimitée.

12. Unité selon la revendication 11, dans laquelle lesdites au moins deux paires de rouleaux (2a, 2b) sont placées côte à côte, de telle sorte qu'une première paire de rouleaux (2a, 2b) est conçue pour tirer en rotation une première roue gauche (TW) d'un véhicule (V), alors que simultanément avec l'action de la première paire de rouleaux (2a, 2b) sur une première roue (TW) d'un véhicule, la deuxième paire de rouleaux (2a, 2b) est conçue pour s'accoupler avec et tirer en rotation une deuxième roue droite (TW) d'un véhicule (V) montée sur le même essieu de la première roue (TW).

13. Unité selon l'une des revendications 8 à 12, dans laquelle lesdits au moins deux rouleaux motorisés ont le même rayon des bases avec un contour circulaire (2a1), mais sont tirés en rotation avec des vitesses de rotation différentes l'une par rapport à l'autre, ou ont un rayon des bases différent avec un contour circulaire (2a1) et sont tirés en rotation à la même vitesse ou à des vitesses différentes.

14. Unité selon l'une quelconque des revendications précédentes 8 à 13, comprenant au moins un onduleur associé à un moteur d'entraînement respectif d'un moyen de traction (2a), cet onduleur étant conçu pour modifier la fréquence d'alimentation électrique d'un moteur respectif et par conséquent la vitesse impartie au moyen de traction (2a), l'actionnement de l'onduleur étant commandé par l'unité de commande électronique.

15. Unité selon l'une quelconque des revendications 8 à 14 pour la mise en œuvre ou l'exécution du procédé selon l'une quelconque des revendications 1 à 7.
